Europäisches Patentamt

European Patent Office

Office européen des brevets

(19)

(11) Veröffentlichungsnummer: **0 247 282**
**B1**

(12) **EUROPÄISCHE PATENTSCHRIFT**

(45) Veröffentlichungstag der Patentschrift:
07.02.90

(51) Int. Cl. $^5$: **F 16 B 13/02**

(21) Anmeldenummer: **87101614.3**

(22) Anmeldetag: **06.02.87**

(54) Dübel aus Kunststoff.

(30) Priorität: **29.03.86 DE 3610655**

(43) Veröffentlichungstag der Anmeldung:
**02.12.87 Patentblatt 87/49**

(45) Bekanntmachung des Hinweises auf die Patenterteilung:
**07.02.90 Patentblatt 90/06**

(84) Bennante Vertragsstaaten:
**AT BE CH ES FR GB GR IT LI NL SE**

(56) Entgegenhaltungen:
**EP-A-0 169 335**
**AT-B-249 330**
**CH-A-518 460**
**FR-A-2 419 425**

(73) Patentinhaber: **fischer-werke Artur Fischer GmbH & Co. KG**
**Weinhalde 14-18**
**D-7244 Waldachtal 3/Tumlingen (DE)**

(72) Erfinder: **Fischer, Artur, Prof. Dr. h.c.**
**Weinhalde 34**
**D-7244 Tumlingen/Waldachtal 3 (DE)**

LIBERGRAF, STOCKHOLM 1990

Beschreibung

Die Erfindung betrifft einen Dübel aus Kunststoff mit einer Längsbohrung und einem durch Eindrehen einer Befestigungsschraube verankerbaren Spreizteil, sowie einem verlängerten Hals, der in einem einen Flansch und vorzugsweise Drehsicherungsrippen aufweisenden Kopfteil endet.

Aus AT-B-249 330 sowie aus EP-A-0 169 335 sind Dübel mit verlängertem Hals bekannt, die in der Regel zur Rahmen- und Lattenbefestigung verwendet werden, wobei der verlängerte Hals in den zu befestigenden Gegenstand eingreift. Die Aufgabe des verlängerten Halses besteht darin, die Schraube im Dübel zu führen und den Ringspalt zwischen dem Schaft der Befestigungsschraube und der Bohrlochwandung im zu befestigenden Gegenstand auszufüllen. Ferner kann der verlängerte Hals zur überbrückung von Hohllagen und in Bündigmontage zur Erzielung von ausreichenden Verankerungstiefen insbesondere in porösen Baustoffen wie Gasbeton und dgl. dienen.

Größere Verankerungstiefen können zwar zu einer Erhöhung des Haltewertes führen, wenn als Versagensursache der Verankerungsgrund ausbricht. Ansonsten ist eine Steigerung des Haltewertes nur dann erreichbar, wenn mit der größeren Verankerungstiefe gleichzeitig auch die Verspreizung des Dübels verbessert wird.

Der Erfindung liegt die Aufgabe zugrunde, einen Dübel mit verlängertem Hals zu schaffen, der bei Bündigmontage insbesondere in porösen Baustoffen Haltewerte aufweist und bei der Befestigung von Gegenständen mit Hohllagen eine Abstandshalterung erlaubt.

Erfindungsgemäß wird dies dadurch erreicht, daß der verlängerte Hals von zwei vom Kopfteil ausgehenden und in einem hülsenartigen Schaftteil wieder zusammengeführten Schenkeln gebildet ist, deren Querschnittskontur im mittleren Bereich eine Ellipse bildet, die zum Schaftund Kopfteil hin allmählich in einen Kreis übergeht, wobei die beiden zueinander weisenden Flächen der Schenkel durch einen Spalt von einander getrennt sind, dessen lichte Weite der Differenz zwischen dem großen und kleinen Ellipsendurchmesser entspricht, und die Spreizflächen der Schenkel in Fortsetzung der Längsbohrung des Kopfteiles mit Längsrillen versehen sind.

Beim Einsatz des Dübels in porösen Vollbaustoffen beispielsweise Gasbeton wird der Dübel in ein dem Außendurchmesser des Kopf- und Schaftteiles entsprechendes Bohrloch eingetrieben. Durch die ellipsenförmige Verdickung der Schenkel des Dübelhalses werden diese auf den Durchmesser des Bohrloches zusammengedrückt, was durch die Bemessung der lichten Weite des Spaltes zu einer Berührung der Spaltflächen im mittleren Schenkelbereich führt. Diese Spaltverengung bewirkt beim Eindrehen einer Befestigungsschraube eine entsprechende Verdrängung und Verkeilung des Dübelmaterials im Bohrloch, so daß schon vor Erreichen des Spreizteiles eine Vorbefestigung eintritt. Die von der Längsbohrung des Kopfteiles ausgehenden Längsrillen in den Spaltflächen der beiden Schenkel bilden einen sich verengenden Schraubenkanal, der zur Führung der Schraube dient und das Einschneiden der Schraube in den Dübelwerkstoff erleichtert. Der verlängerte Hals des Dübels trägt somit zur Verbesserung der Verankerung bei, die durch vollständiges Einschrauben der Schraube in den Spreizteil des Dübels vollendet wird. Mit der Spreizmöglichkeit des verlängerten Halses wird auch eine zusätzliche Drehsicherung erreicht, so daß für die Verankerung des eigentlichen Spreizteiles hohe Drehmomente eingebracht werden können.

Der erfindungsgemäße Dübel eignet sich aufgrund der Verspannungsmöglichkeit im Bereich des verlängerten Halses auch für Abstandsmontagen, da durch die Verspannung im zu befestigenden Gegenstand der eingestellte, bzw. durch Unebenheiten der Wand sich ergebende Abstand fixiert wird. Die auf den zu befestigenden Gegenstand wirkenden Druckkräfte werden über die im Bohrloch des zu befestigenden Gegenstandes verkeilten Schenkel vom Dübel aufgenommen.

Die zu verwendende Befestigungsschraube weist vorteilhafterweise ein bis zu ihrem Kopf sich erstreckendes Gewinde auf.

Durch das verlängerte Gewinde entsteht zwischen den Schenkeln des verlängerten Halses und der Befestigungsschraube eine Gewindeverbindung. Ferner wird das Eindrehmoment der Schraube reduziert.

In Ausgestaltung der Erfindung können an den Außenflächen der Schenkel vorzugsweise versenkbare Sperrzungen angeordnet sein. Die Sperrzungen verhindern in sehr porösen Baustoffen ein Ausweichen bzw. ein Verdrehen der Schenkel.

Schließlich kann in weiterer Ergänzung der Erfindung das Spreizteil in an sich bekannter Weise durch zwei von einem eine Längsbohrung mit Innengewinde oder Innenrippen aufweisenden Fußteil ausgehenden Schenkel gebildet sein. Durch diese Art der Ausbildung des Spreizteiles ist dieser Dübel für alle Baustoffe selbst für Hohllochziegel und Hohlraummontagen geeignet. Bei einer Verankerung des Dübels in Gasbeton mit diesem speziellen Spreizteil hat es sich als besonders vorteilhaft erwiesen, das den Spreizteil aufnehmende Teilstück des Bohrloches mit einer speziellen Bohrvorrichtung so auszureiben, daß eine birnenförmige Bohrlocherweiterung entsteht. Die Schenkel des Spreizteiles können somit ausknicken und sich an die Wandung der Erweiterung anlegen. Dadurch entsteht eine erheblich größere Aufspreizung, als dies nach dem üblichen Spreizprinzip durch Eindrehen einer Befestigungsschraube in eine sich verengende Innenbohrung möglich wäre.

In der Zeichnung ist ein Ausführungsbeispiel der Erfindung dargestellt. Es zeigen:

Figur 1 die Bündigmontage des erfindungsgemäßen Dübels in Gasbeton

Figur 2 die Abstandshalterung einer Latte.

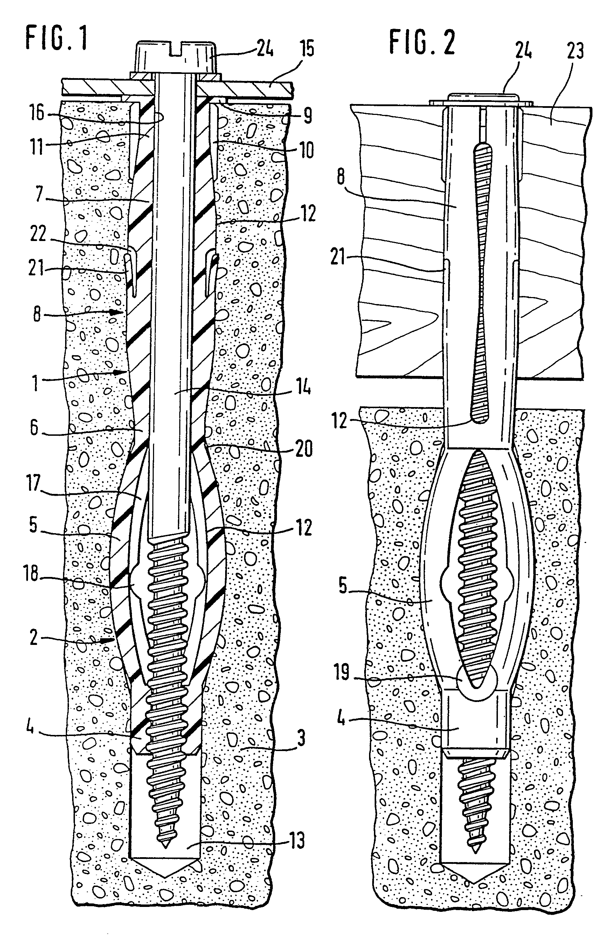

Der in Figur 1 und 2 dargestellte Dübel 1 weist einen für sämtliche Baustoffe geeigneten Spreizteil 2 auf. In Figur 1 ist der Dübel in einem porösen Vollbaustoff 3 wie Gasbeton in Bündigmontage verankert dargestellt. Das Spreizteil 2 des Dübels 1 besteht aus dem Fußteil 4, das eine Längsbohrung mit Innenrippen-aufweist, und den beiden vom Fußteil ausgehenden Schenkeln 5, die wiederum in dem hülsenartigen Schaftteil 6 zusammengeführt sind. An das hülsenartige Schaftteil 6 schließt sich der aus ebenfalls zwei Schenkeln 7 gebildete verlängerte Hals 8 an, der in einem mit einem rechtwinklig abstehenden Flansch 9 und Drehsicherungsrippen 10 versehenen Kopfteil 11 endet. Die Querschnittskontur der Schenkel 5, 7 sowohl des Spreizteiles 2 als auch des verlängerten Halses 8 bildet jeweils in ihrem Mittelbereich eine Ellipse, die zu den Schenkel enden hin in einen Kreis übergeht. Die Schenkel des verlängerten Halses 8 als auch des Spreizteiles 2 sind jeweils durch einen Spalt 12 getrennt, dessen lichte Weite der Differenz zwischen dem großen und kleinen Ellipsendurchmesser entspricht. Damit sind die Schenkel auf den Durchmesser des Bohrloches 13 zusammendrückbar, wobei die Spaltflächen der Schenkel eine Verengung bilden. Nach dem Einsetzen des Dübels 1 in das Bohrloch 13 wird die Befestigungsschraube 14 durch den zu befestigenden Gegenstand 15 hindurch in die Längsbohrung 16 des Dübels eingedreht. Die sich durch die zusammengedrückten Schenkel ergebende Verengung ermöglicht beim Eindrehen der Befestigungsschraube 14 eine Verdrängung und Aufspreizung der Schenkel. In den Spaltflächen der Schenkel 7 vorgesehene Längsrillen dienen zum einen als Führung der Schraube 14 und erleichtern zum anderen das Einschneiden des Gewindes der Schraube in das Dübelmaterial. Nachdem die Schraube 14 das hülsenartige Schaftteil 6 durchdrungen hat, greift die Schraube 14 in den durch die beiden Schenkel 5 gebildeten Spreizteil 2 des Dübels und in das als Mutter dienendes Fußteil 4 ein. Der dabei entstehende axiale Zug führt zusätzlich zu einem Verspannen bzw. Ausknicken der Schenkel 5 des Spreizteiles 2. Um das Ausknicken zu erleichtern, ist im Bereich der größten Verdickung eine Querschnittsschwächung in Form einer in Spaltebene verlaufenden Querbohrung 18 vorgesehen. Eine weitere Querschnittsschwächung befindet sich im Bereich der Anbindung der Schenkel 5 an das Fußteil 4. Diese Querschnittsschwächung wird durch zwei rechtwinklig zur Spaltebene verlaufende Kerben 19 gebildet. Auch die Spaltflächen der Schenkel 5 des Spreizteiles 2 weisen zur Schraubenführung Längsrillen 17 auf. Um auch in festerem Gasbeton eine erhöhte Aufspreizung durch Ausknicken der Schenkel zu erreichen, ist es zweckmäßig, mit einer speziellen Bohrvorrichtung für das Spreizteil 2 eine birnenförmige Erweiterung 20 auszureiben. Zur zusätzlichen Drehsicherung des Dübels während des Spreizvorganges sind an den Schenkein 7 des verlängerten Halses 8 Sperrzungen 21 angeordnet, die in Ausnehmungen 22 versenkbar sind.

Bei der in Figur 2 dargestellten Abstandsbefestigung wird die Spreizmöglichkeit des verlängerten Halses 8 des Dübels 1 dazu verwendet, den Dübelhals in der im Abstand zu befestigenden Latte 23 festzusetzen. Nach der Verankerung des Dübels 1 werden die auf die Latte wirkenden Druckkräfte vom Dübel übernommen und damit der eingestellte Abstand fest fixiert. Um eine gute Verbindung zwischen den Schenkeln 7 des verlängerten Halses 8 und der Befestigungsschraube 14 zu erreichen, ist das Gewinde der Schraube 14 bis zu deren Kopf 24 verlängert.

## Patentansprüche

1. Dübel aus Kunststoff mit einer Längsbohrung und einem durch Eindrehen einer Befestigungsschraube verankerbaren Spreizteil, sowie einem verlängerten Hals, der in einem einen Flansch und vorzugsweise Drehsicherungsrippen aufweisenden Kopfteil endet, *dadurch gekennzeichnet*, daß der verlängerte Hals von zwei vom Kopfteil ausgehenden und in einem hülsenartigen Schaftteil wieder zusammengeführten Schenkeln gebildet ist, deren Querschnittskontur im mittleren Bereich eine Ellipse bildet, die zum Schaft- und Kopfteil hin allmählich in einen Kreis übergeht, wobei die beiden zueinander weisenden Flächen der Schenkel durch einen Spalt voneinander getrennt sind, dessen lichte Weite der Differenz zwischen dem großen und kleinen Ellipsendurchmesser entspricht, und die Spreizflächen der Schenkel in Fortsetzung der Längsbohrung des Kopfteiles mit Längsrillen versehen sind.

2. Dübel nach Anspruch 1, *dadurch gekennzeichnet*, daß an den Außenflächen der Schenkel vorzugsweise versenkbare Sperrzungen angeordnet sind.

3. Dübel nach Anspruch 1, *dadurch gekennzeichnet*, daß das Spreizteil in an sich bekannter Weise durch zwei von einem eine Längsbohrung mit Innengewinde oder Innenrippen aufweisenden Fußteil ausgehenden Schenkel gebildet ist.

## Claims

1. Plug made of plastics material, having a longitudinal bore and an expansible portion which can be anchored by screwing in a fastening screw, and an elongated neck which ends in a head portion having a flange and, preferably, ribs that secure it against rotation, characterised in that the elongated neck is formed by two legs that start at the head portion and come together in a sleeve-like shank portion, the outline in crosssection of the legs being an ellipse in the middle region, which ellipse gradually becomes a circle in the direction towards the shank and head portion, the two surfaces of the legs that face one another being separated by a gap the transverse dimension of which corresponds to the difference between the major and the minor diameters of the ellipse, and the expansion surfaces of the legs being provided with longitudinal grooves forming a continuation of the longitudinal bore in the head po hion.

2. Plug according to claim 1, characterised in that locking, preferably retractable, tongues are arranged on the outer surfaces of the legs.

3. Plug according to claim 1, characterised in that the expansible portion is formed in a manner known *per se* by two legs starting from a base portion having a longitudinal bore with an internal thread or internal ribs.

**Revendications**

1. Cheville en matière plastique, comportant un alésage longitudinal et une partie expansible susceptible d'être ancrée quand on y visse une vis de fixation, ainsi qu'un col de forme allongée qui se termine par une partie formant tête présentant une collerette et de préférence des nervures destinées à l'empêcher de tourner, cheville caractérisée en ce que le col de forme allongée est constitué de deux jambages, qui partent de la partie formant tête et qui se rejoignent à nouveau pour former une partie formant fût du genre d'une douille, dont le contour de section transversale forme, dans la zone médiane, une ellipse qui se transforme peu à peu en cercle en direction de la partie formant tête et en direction de la partie formant fût, les deux surfaces des jambages dirigées l'une vers l'autre étant séparées l'une de l'autre par une fente dont la largeur libre correspond à la différence entre le grand diamètre et le petit diamètre de l'ellipse, et les surfaces d'expansion des jambages étant munies de nervures longitudinales dans le prolongement de l'alésage longitudinal de la partie formant tête.

2. Cheville selon la revendication 1, caractérisée en ce que des languettes de blocage, de préférence susceptibles de s'enfoncer, sont disposées sur les surfaces extérieures des jambages.

3. Cheville selon la revendication 1, caractérisée en ce que la partie d'expansion est constituée, de manière connue en elle-même, de deux jambages qui partent d'une partie formant pied présentant un alésage longitudinal muni d'un filetage intérieur ou de nervures intérieures.

FIG.1    FIG.2